# EUROPEAN PATENT APPLICATION

(11) **EP 4 603 964 A2**
(43) Date of publication of application: **20.08.2025**
(21) Application number: 25186309.8
(22) Date of filing: 30.06.2025
(51) Int. Cl.: G06F 3/16, G06F 9/451

(54) **METHOD, APPARATUS, DEVICE, STORAGE MEDIUM AND PROGRAM PRODUCT FOR INTERACTING WITH DIGITAL ASSISTANT**

(30) Priority: 16.10.2024 CN 202411448809
(71) Applicant: Beijing Volcano Engine Technology Co., Ltd., Beijing 100190 (CN)
(72) Inventor: Chen, Jiaqi, Beijing, 100028 (CN)
(74) Representative: Isarpatent

(57) **Abstract**

Embodiments of the disclosure provide a method, an apparatus, a device, a storage medium and a program product for interacting with a digital assistant. The method includes: receiving, through a first interaction interface of a first digital assistant, first input information input by a first user; determining, based on the first input information, a target digital assistant for the first input information from a plurality of second digital assistants, different digital assistants in the plurality of second digital assistants configured to perform tasks of different types; and presenting, in the first interaction interface, target response information for the first input information, the target response information obtained based at least on processing of the first input information by the target digital assistant. In this manner, the target digital assistant for processing the input information may be automatically determined based on the input information of the user.

## Description

### FIELD

Example embodiments of the present disclosure generally relate to the field of computer technique, and in particular, to a method, an apparatus, a device, a storage medium and a program product for interacting with a digital assistant.

### BACKGROUND

With the development of information technology, digital assistants such as voice assistants, robots (BOT), agents, etc., have been greatly developed and applied. Various types of digital assistants bring great convenience to users in many aspects. With the help of the digital assistants, users can implement various functions, for example, to obtain answers to certain questions by asking and answering with the digital assistants, or to quickly process a certain service with the assistance of the digital assistants.

### SUMMARY

In a first aspect of the present disclosure, a method for interacting with a digital assistant is provided. The method includes: receiving, through a first interaction interface of a first digital assistant, first input information input by a first user; determining, based on the first input information, a target digital assistant for the first input information from a plurality of second digital assistants, different digital assistants in the plurality of second digital assistants configured to perform tasks of different types; and presenting, in the first interaction interface, target response information for the first input information, the target response information obtained based at least on processing of the first input information by the target digital assistant.

In a second aspect of the present disclosure, an apparatus for interacting with a digital assistant is provided. The apparatus includes: an information receiving module configured to receive, through a first interaction interface of a first digital assistant, first input information input by a first user; a target digital assistant determining module configured to determine, based on the first input information, a target digital assistant for the first input information from a plurality of second digital assistants, different digital assistants in the plurality of second digital assistants being configured to perform tasks of different types; and an information presenting module configured to present, in the first interaction interface, target response information for the first input information, the target response information being obtained based on at least partly of processing of the first input information by the target digital assistant.

In a third aspect of the present disclosure, an electronic device is provided. The electronic device includes at least one processing unit; and at least one memory coupled to the at least one processing unit and storing instructions for execution by the at least one processing unit, where the instructions, when executed by the at least one processing unit, cause the electronic device to perform the method according to the first aspect.

In a fourth aspect of the present disclosure, a computer-readable storage medium is provided. The medium is stored thereon with a computer program, where the computer program, when executed by a processor, implements the method according to the first aspect.

In a fifth aspect of the present disclosure, a computer program product is provided. The product includes a computer program, where the computer program, when executed by a processor, implements the method according to the first aspect of the present disclosure.

It should be understood that, the content described in this section is not intended to limit the key or important features of the embodiments of the present disclosure, nor is it intended to limit the scope of the present disclosure. Other features of the present disclosure will become readily comprehensible through the following description.

### BRIEF DESCRIPTION OF THE DRAWINGS

The above and other features, advantages and aspects of various embodiments of the present disclosure will become more apparent when taken in conjunction with the drawings and with reference to the following detailed description. In the drawings, the same or similar reference numbers refer to the same or similar elements, where:
FIG. 1 shows a schematic diagram of an example environment in which embodiments of the present disclosure can be implemented;
FIG. 2 shows a flowchart of an example process for interacting with a digital assistant according to some embodiments of the present disclosure;
FIG. 3 shows a flowchart of an example process for generating a processing result according to some embodiments of the present disclosure;
FIG. 4 shows a flowchart of an example process for processing target information according to some embodiments of the present disclosure;
FIG. 5 shows a flowchart of a method for interacting with a digital assistant according to some embodiments of the present disclosure;
FIG. 6 shows an example structural block diagram of an apparatus for interacting with a digital assistant according to some embodiments of the present disclosure; and
FIG. 7 shows a block diagram of an electronic device that can implement one or more embodiments of the present disclosure.

### DETAILED DESCRIPTION OF EMBODIMENTS

The embodiments of the present disclosure will be described in more detail hereinafter with reference to the drawings. Although some embodiments of the present disclosure are shown in the drawings, it should be understood that the present disclosure may be implemented in various forms, and should not be construed as limited to the embodiments set forth herein. On the contrary, these embodiments are provided for a thorough and complete understanding of the present disclosure. It should be understood that, the drawings and embodiments of the present disclosure are only for illustrative purposes, and are not intended to limit the protection scope of the present disclosure.

In the description of the embodiments of the present disclosure, the term "include/comprise" and similar terms should be understood as open-ended inclusions, that is, "include/comprise but not limited to". The term "based on" should be understood as "at least partially based on". The term "an embodiment" or "the embodiment" should be understood as "at least one embodiment". The term "some embodiments" should be understood as "at least some embodiments". Other explicit and implicit definitions may also be included below.

In this document, unless explicitly stated, performing a step "in response to A" does not mean that the step is performed immediately after "A", but may include one or more intermediate steps.

It should be understood that, data involved in the technical solution of the present disclosure (including but not limited to data itself, data acquisition, use, storage, or deletion) should comply with requirements of corresponding laws, regulations and related provisions.

It should be understood that, before using the technical solutions disclosed in the embodiments of the present disclosure, the related users should be informed of the types, usage scope, usage scenarios, etc. of the information involved in the present disclosure in an appropriate manner according to relevant laws and regulations, and the authorization of the related users should be obtained, where the related users may include any type of rights holders, such as individuals, enterprises and groups.

For example, in response to receiving an active request from a user, prompt information is sent to the related user to explicitly prompt the related user that the operation requested to be performed will require obtaining and using information of the related user, so that the related user can independently select whether to provide information to a software or hardware such as an electronic device, an application, a server, or a storage medium that performs the operation of the technical solution of the present disclosure according to the prompt information.

As an optional but non-restrictive implementation, a manner of sending the prompt information to the related user in response to receiving the active request from the related user may be, for example, a pop-up window, and the prompt information may be presented in the pop-up window in a text form. In addition, the pop-up window may also carry a selection control for the user to select "agree" or "disagree" to provide information to the electronic device.

It should be understood that, the above process of notifying and obtaining the authorization of the user is only illustrative, and does not constitute a limitation on the implementations of the present disclosure. Other manners that satisfy relevant laws and regulations may also be applied to the implementations of the present disclosure.

As used herein, a term "model" may learn from training data an association between a respective input and a respective output, such that after the training is completed, a corresponding output may be generated for a given input. The generation of the model may be based on machine learning technology. Deep learning is a machine learning algorithm that uses multiple processing units to process an input and provide a corresponding output. A neural network model is an example of a model based on deep learning. In this document, the "model" may also be referred to as "machine learning model", "learning model", "machine learning network" or "learning network", and these terms are used interchangeably herein.

As mentioned above, various types of digital assistants have been greatly developed and applied. Currently, for an organization (e.g., an enterprise, a group), different digital assistants (e.g., agents) are usually constructed or introduced for different departmental needs or different service scenarios to form a multi-digital assistant system to help organization members (e.g., enterprise employees, users) process different services or obtain different types of information. These digital assistants usually need to be fully and effectively utilized during the application process due to limited resources, so as to be allocated to people in need as much as possible. However, due to the large number of digital assistants, the organization members need to find the digital assistant they need among the multiple digital assistants, which makes the organization members have a higher time cost for using the digital assistants and reduces the convenience.

In view of this, according to embodiments of the present disclosure, an improved solution for interacting with a digital assistant is provided. According to the solution of the embodiments of the present disclosure, first input information input by a first user is received through a first interaction interface of a first digital assistant. A target digital assistant for the first input information is determined from a plurality of second digital assistants based on the first input information, different digital assistants in the plurality of second digital assistants configured to perform tasks of different types. Target response information for the first input information is presented in the first interaction interface, the target response information obtained based at least on processing of the first input information by the target digital assistant.

In this manner, the target digital assistant for processing the input information may be automatically determined based on the input information of the user. In this manner, the costs of the user understanding the functions of the digital assistants and manually selecting a digital assistant to be used are significantly reduced, and the user experience and convenience of using a multi-digital assistant system are greatly improved.

Some example embodiments of the present disclosure will be described hereinafter with reference to the drawings.

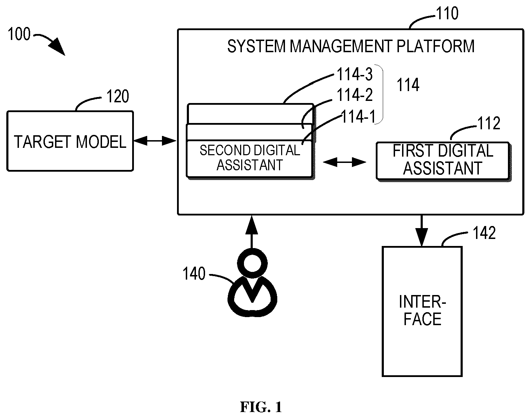

FIG. 1 shows a schematic diagram of an example environment 100 in which embodiments of the present disclosure can be implemented. The example environment 100 may include a system management platform 110. The system management platform 110 may be deployed with a first digital assistant 112 and a plurality of second digital assistants 114, such as a second digital assistant 114-1, a second digital assistant 114-2, and a second digital assistant 114-3 (these digital assistants may be collectively referred to as the second digital assistants 114). Although these digital assistants are shown as being deployed on the system management platform 110, it should be understood that in some embodiments, some or all of these digital assistants may be deployed at other devices or platforms and may be accessed by the system management platform 110. Users may log in to the system management platform 110 via various terminal devices or client devices to interact with the first digital assistant 112 and/or the plurality of second digital assistants 114.

In some embodiments, the first digital assistant 112 is configured to interact with a user 140 to output and/or receive information from the user 140. The first digital assistant 112 may determine a target digital assistant for input information from the plurality of second digital assistants 114 based on input information of the user 140, so as to invoke the target digital assistant to process the input information of the user 140 and return target response information to the user 140.

In some embodiments, a plurality of different second digital assistants 114 may be configured in the system management platform for an organization or a user set using the system management platform 110. The plurality of second digital assistants 114 are configured to implement different types of functions, respectively. For example, the second digital assistant 114-1 is configured to process financial-related problems or services. The second digital assistant 114-2 is configured to process administrative-related problems or services. The second digital assistant 114-3 is configured to process IT-related problems or services. It should be understood that for different organizations, the second digital assistants configured by the system management platform 110 may be different or the same.

In some embodiments, at least part of the functions of the system management platform 110 may be implemented based on a target model 120. In a process of presenting, by the system management platform 110, the response information for the input information of the user, one or more target models 120, for example, capabilities of the target models 120, may be invoked. As used herein, a term "model" may learn from training data an association between a respective input and a respective output, such that after the training is completed, a corresponding output may be generated for a given input. The generation of the model may be based on machine learning technology. Deep learning is a machine learning algorithm that uses multiple processing units to process an input and provide a corresponding output. A neural network model is an example of a model based on deep learning. In this document, the "model" may also be referred to as "machine learning model", "learning model", "machine learning network" or "learning network", and these terms are used interchangeably herein. In some embodiments, each of the first digital assistant 112 and the plurality of second digital assistants 114 may be configured with one or more processing models or machine learning models. In some embodiments, the system management platform 110 may be configured with a plurality of different common processing models, and the first digital assistant 112 and the plurality of second digital assistants 114 may invoke different processing models to process the input information from the user as needed.

In the embodiments of the present disclosure, each of the second digital assistants may be a digital assistant based on a rule engine or a digital assistant based on a machine learning model. The first digital assistant and each of the second digital assistants may have a respective corresponding machine learning model, or may share one machine learning model to complete their respective tasks. The machine learning model here may be a large language model (LLM) or an expert model trained with vertical domain data.

The system management platform 110 may be deployed locally on a terminal device of the user 140, and/or may be supported by a server-side device. For example, the terminal device of the user 140 may run a client having the system management platform, and the client may support the user to interact with the system management platform provided by the server-side. In the case where the system management platform runs locally on the terminal device of the user, the user 140 may directly use the terminal device to interact with the local system management platform. In the case where the system management platform runs on the server-side device, the server-side device may implement service provisioning for the client running on the terminal device based on a communication connection with the terminal device. The system management platform 110 may present a corresponding interface 142 to the user 140 based on an operation of the user 140, to output and/or receive information to/from the user 140.

The system management platform 110 may run on an appropriate electronic device. The electronic device here may be any type of device with computing power, including a terminal device or a server-side device. The terminal device may be any type of mobile terminal, stationary terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a positioning device, a television receiver, a radio broadcast receiver, an e-book device, a game device, or any combination thereof, including accessories and peripherals of these devices or any combination thereof. The server-side device may include, for example, a computing system/server, such as a mainframe, an edge computing node, a computing device in a cloud environment, and the like. In some embodiments, the system management platform 110 may be implemented based on cloud services.

It should be understood that, the structures and functions of the respective elements in the environment 100 are described for illustrative purposes only, without implying any limitation to the scope of the present disclosure.

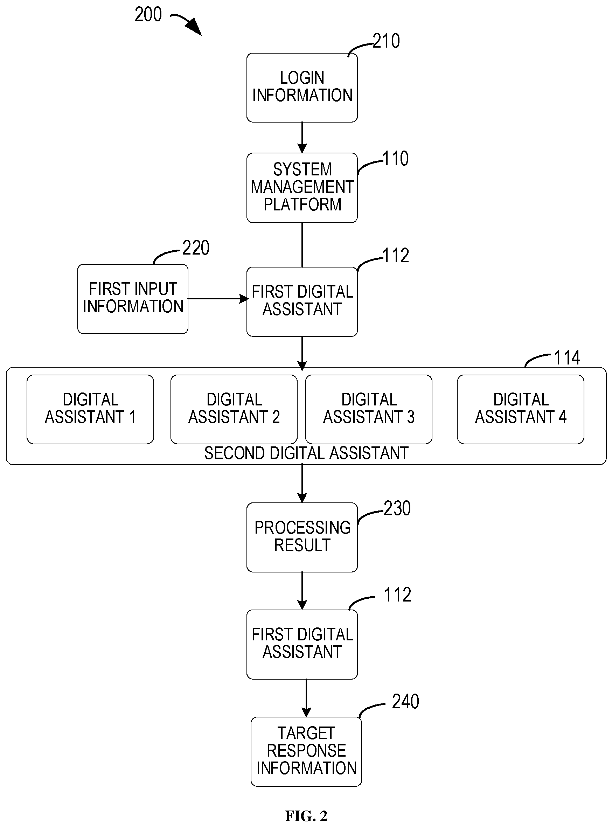

FIG. 2 shows a flowchart of an example process 200 for interacting with a digital assistant according to some embodiments of the present disclosure. For ease of discussion, the process 200 will be described with reference to the environment of FIG. 1. In the environment 100, the process 200 may be implemented on the system management platform 110, but some operations therein may be performed by requesting a server-side device (not shown).

In some embodiments, the system management platform 110 may present a corresponding interface 142 to the user 140 based on a successful verification of the login information 210 of the user 140. In the interface 142, the system management platform 110 may present to the user 140 the first digital assistant 112 and the digital assistants that are accessible and usable by the user 140 among the plurality of second digital assistants 114.

In some embodiments, the system management platform 110 may determine, based on the login information of the user 140, the second digital assistant 114 that is accessible/usable by the user among the plurality of second digital assistants 114. In other words, in the embodiments of the present disclosure, different accessible and usable second digital assistants 114 may be configured for different users 140. This allows different second digital assistants 114 to be provided to target users in need as much as possible, full utilization of the second digital assistants 114 is ensured.

In some embodiments, the system management platform 110 may present the first interaction interface of the first digital assistant 112 to the user 140 based on the login information of the user 140 or a preset operation. The first interaction interface may be the same as or different from the interface 142. The system management platform 110 may receive, through the first digital assistant 112, first input information 220 input by the user 140 in the first interaction interface. The first input information 220 may be various information, such as "what should I do if an application is inaccessible", "help me to solve computer freezing", "help me process and analyze data", "what is the attendance system", and so on. The first digital assistant 112 may determine a target digital assistant for the first input information 220 from the plurality of second digital assistants 114 based on the first input information 220. The plurality of second digital assistants 114 may be different types of digital assistants, respectively, and are configured to perform different types of functions, respectively. For example, a digital assistant 1 may be a first-type agent. A digital assistant 2 may be a second-type agent. A digital assistant 3 may be a third-type agent. A digital assistant 4 may be a fourth-type agent.

For example, digital assistants 1-4 may be configured to perform processing of administrative, IT, financial and other related information, respectively. For example, the digital assistant 1 may perform operations such as question answering, analysis or query on financial-related information. The digital assistant 2 may perform operations such as question answering, analysis or query on administrative-related information. The digital assistant 3 may perform operations such as question answering, analysis or query on IT-related information. After determining the target digital assistant, the first digital assistant 112 sends the first input information 220 to the target digital assistant, such as digital assistant 1, so as to utilize the target digital assistant to perform processing on the first input information 220 to obtain a processing result 230. After the processing of the first input information 220 is completed, the target digital assistant returns the processing result 230 to the first digital assistant 112. The first digital assistant 112 generates target response information 240 for the first input information 220 based at least in part on the processing result 230, and presents the target response information 240 in the first interaction interface.

In some embodiments, the first digital assistant 112 may determine a type of a target task indicated by the first input information 220 by using a machine learning model associated with the first digital assistant 112. Then, the first digital assistant 112 determines, based on the target task type, the target digital assistant for the first input information 220 from the plurality of second digital assistants 114. For example, the machine learning model associated with the first digital assistant 112 may be a language model (LM). The first digital assistant 112 may determine, by using the LM, a type of a task that the user wants to perform from the first input information 220. For example, when the first input information is "query and analyze the company's cash flow in September", it may be determined, by using the LM model, that the task that the user wants to perform is a financial type, and thus a financial-related digital assistant 114 may be determined from the plurality of second digital assistants 114 as the target digital assistant.

In some embodiments, the first digital assistant 112 may determine, based on the first input information 220, a candidate digital assistant for the first input information 220 from the plurality of second digital assistants 114. The candidate digital assistant may be determined in a similar manner as the target digital assistant as described above, which will not be repeated here. Then the candidate digital assistant is used to perform processing on the first input information 220 to obtain the processing result 230. The first digital assistant 112 determines, using a machine learning model (e.g., LM) associated with the first digital assistant 112, whether the processing result 230 matches the first input information 220. The first digital assistant 112 may present, in the first interaction interface, the target response information 240 generated based on the processing result 230 in response to the processing result 230 matching the first input information. The first digital assistant 112 may determine, using the machine learning model associated with the first digital assistant 112, a digital assistant different from the candidate digital assistant from the plurality of second digital assistants 114 as the target digital assistant to perform processing on the first input information 220 in response to the processing result 230 not matching the first input information.

In some embodiments, in response to the login information 210 of the user 140, the system management platform 110 may present, in the interface 142, the digital assistant that is accessible and usable by the user 140 among the plurality of second digital assistants 114. In response to the user 140 selecting the target digital assistant from the accessible and usable digital assistants, a second interaction interface of the target digital assistant may be presented. The second interaction interface is different from the first interaction interface. The system management platform 110 may receive, through the second interaction interface of the target digital assistant, second input information input by the user 140. The response information obtained by processing the second input information with the target digital assistant is presented in the second interaction interface. The second input information may be processed by the target digital assistant invoking a corresponding model.

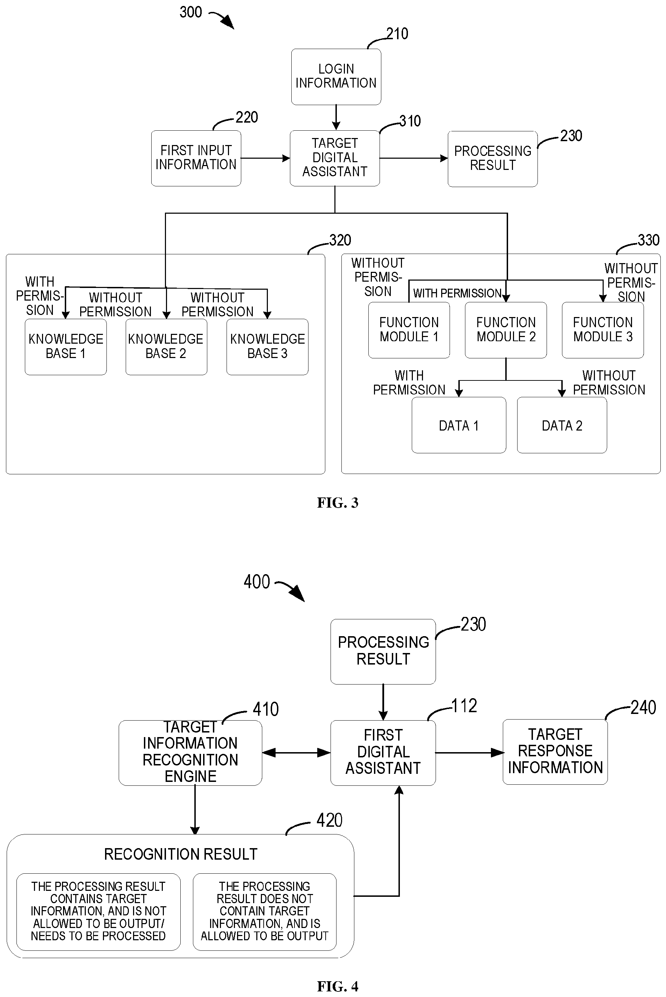

FIG. 3 shows a flowchart of an example process 300 for generating a processing result according to some embodiments of the present disclosure. For ease of discussion, the process 300 will be described with reference to the environment of FIG. 1. In the environment 100, the process 300 may be implemented on the system management platform 110, but some operations therein may be performed by requesting a server-side device (not shown).

In some embodiments, the system management platform 110 may present a corresponding interface 142 to the user 140 based on a successful verification of the login information 210 of the user 140. In the interface 142, the system management platform 110 may present to the user 140 the digital assistants that are accessible and usable by the user 140 among the plurality of second digital assistants 114. The system management platform 110 or the first digital assistant 112 may determine the target digital assistant 310 for the first input information 220 from the digital assistants that are accessible and usable by the user 140 based on the first input information 220 input by the user and/or a selection operation of the user. The process of determining the target digital assistant 310 may be referred to the process of determining the target digital assistant in the process 200 described above with reference to FIG. 2, which will not be repeated here.

In some embodiments, the system management platform 110 may verify the login information 210 of the user 140 based on single sign-on (SSO). The SSO allows the user 140 to use one set of login information 210 to access the system management platform 110 and a plurality of systems or applications that are related to the system management platform 110 but independent of each other. For example, the system management platform 110 may provide an application to the user 140. After the user 140 logs in to the application, the system management platform 110 may obtain the login information of the user 140.

In some embodiments, the system management platform 110 may determine the permission information of the user 140 based on the login information 210 of the user 140. The permission information of the user 140 may be associated with the identity, role, etc. of the user. That is, the system management platform 110 may grant the user 140 different permissions based on information such as the identity and role of the user. In some embodiments, the system management platform 110 may determine, based on the permission information of the user 140, the digital assistant that is accessible and usable by the user 140 among the plurality of second digital assistants 114. In some embodiments, the system management platform 140 may use a role-based access control (RBAC) model to assign different users 140 with the permissions for different resources in the system management platform 110. For example, the financial staff of the organization are granted the permission of the digital assistant related to financial processing, and the marketing department staff of the organization are granted the permission of the digital assistant related to data analysis. In this manner, the credibility of the identity of the user 140 accessing the system management platform 110 can be ensured, and different digital assistants, knowledge bases, function modules and/or data permissions can be allocated to different user roles to ensure the efficient utilization of resources and data security.

In some embodiments, the target digital assistant 310 may obtain the permission information of the user 140 from the system management platform 110 or the first digital assistant 112, and determine, based on the permission information, the knowledge base and/or the function module that are accessible or authorized by the user 140 from the knowledge base 320 or the function module 330. Further, the first input information 220 may be processed using the knowledge base and/or the function module that are accessible or authorized by the user 140 to obtain the processing result 230. In some embodiments, the system management platform 110 or the target digital assistant 310 may allocate different knowledge base or function module permissions to the user based on the permission information of the user 140. Taking FIG. 3 as an example, the permission information may indicate that the user 140 may use the knowledge base 1, but cannot use the knowledge base 2 and the knowledge base 3. The permission information may also indicate that the user 140 may use the function module 2, but cannot use the function module 1 and the function module 3. The target digital assistant 310 may invoke the knowledge base 2 and the function module 2 to perform processing on the first input information to obtain the processing result 230.

In some embodiments, the knowledge base 320 may be a knowledge base configured for the target digital assistant 310 or a knowledge base accessible to the target digital assistant 310. The function module 330 may be a function module configured for the target digital assistant 310 or a function module accessible to the target digital assistant 310. In some embodiments, the knowledge base may be a knowledge base associated with the operation of the system management platform 110 and/or the organization, such as an operation and maintenance manual, system information, a management method, a service description, expansion experience, a market guide, etc. Different knowledge base permissions may be allocated for different permissions of the user 140. For example, IT users may be allocated knowledge base permissions such as an operation and maintenance manual, system information, and a management method. Marketing personnel may be allocated knowledge base permissions such as a business description, expansion experience, and a market guide. The function module may be various functional plug-ins configured or accessible by the system management platform 110, such as plug-ins such as a customer relationship management system (CRM), an office automation system (OA), an IT service management system (ITSM), an enterprise resource planning system (ERP), and a human resources system (HR).

In some embodiments, the target digital assistant 310 may obtain the permission information of the user 140 from the system management platform 110 or the first digital assistant 112, and determine, based on the permission information, data and/or a database that are accessible or authorized by the user 140 in or associated with the knowledge base 320 and/or the function module 330. Further, the first input information 220 may be processed by using the data and/or the database that are accessible or authorized by the user 140 to obtain the processing result 230. Taking FIG. 3 as an example, the permission information of the user 140 indicates that the user 140 may use the data 1 in the function module 2, but cannot use the data 2 in the function module 2. Therefore, the target digital assistant 310 may perform processing on the first input information 220 based on the data 1 in the function module 2 to obtain the processing result 230.

In some embodiments, the target digital assistant 230 may invoke the target model 120 associated with the target digital assistant 310 to perform processing on the first input information 220.

FIG. 4 shows a flowchart of an example process 400 for processing target information according to some embodiments of the present disclosure. For ease of discussion, the process 400 will be described with reference to the environment of FIG. 1. In the environment 100, the process 400 may be implemented on the system management platform 110, but some operations therein may be performed by requesting a server-side device (not shown).

In some embodiments, for data security, the system management platform 110 may perform target information recognition on the processing result 230 to determine whether there is target information in the processing result. For example, after obtaining the processing result 230, the first digital assistant 112 may invoke a target information recognition engine 410 to recognize the processing result to determine whether there is target information in the processing result 230. In some embodiments, the target information may be information of a predetermined type or information including data with a predetermined attribute, such as internal information of the organization, research and development data, and the like. Alternatively or additionally, in some embodiments, the target information may be information associated with the permission information of the user 140, such as data that the user 140 has no permission to access in the organization.

In some embodiments, the target information recognition engine 410 may include a built-in data recognition template. The target information recognition engine 410 may determine sensitive text content in the organization through the built-in data recognition and classification template, and determine sensitive text information and data classification and grading on this basis.

In some embodiments, the target information recognition engine 410 may be configured with a blocking policy for the target information. For example, when the processing result 230 includes the target information of the organization, the risk will be avoided by prohibiting sending.

In some embodiments, the system management platform 110 may present the processing result 230 in the first interaction interface of the first digital assistant 112 as the target response information 240 in response to the recognition result 240 indicating that no target information is recognized in the processing result 230. In some embodiments, the system management platform 110 may update the processing result 230 based on the blocking policy in response to the recognition result 240 indicating that the target information is recognized in the processing result 230, and present the updated processing result in the first interaction interface as the target response information 240.

It should be understood that the blocking policy may be a unified blocking policy configured based on organization members, or different blocking policies may be configured according to different member permissions.

The blocking policy may include various appropriate policies. In some embodiments, the blocking policy may include a replacement policy. In this case, the system management platform 110 may replace the processing result 230 with preset information, thereby updating the processing result 230. For example, the preset information may inform the user 140 that the processing result contains inaccessible content and cannot be presented. For example, the system management platform 110 may replace the processing result 230 with "the processing result contains special information and cannot be displayed" as the target response information 240. In some embodiments, the blocking policy may include a removal policy. In this case, the system management platform 110 may remove the target information from the processing result 230, thereby updating the processing result 230. That is, in this case, information in the processing result 230 other than the target information may be presented to the user 140. In some embodiments, the blocking policy may include a mask policy. The system management platform 110 may apply a mask to the target information, thereby updating the processing result 230. For example, the target information in the processing result 230 may be replaced with a preset symbol or the like.

Today, as artificial intelligence technology empowers various service applications, in the work systems of various organizations such as enterprises, institutions, and teams, there may be digital assistants that complete various types of tasks, and users in the organizations need to select corresponding digital assistants to assist in completing tasks according to their own task types. When the number of digital assistants increases, it is also a cumbersome task to correctly select a digital assistant corresponding to a task. In addition, different digital assistants in an organization may have different openness scopes for members in the organization, and therefore, it is also urgent to manage and control the usage rights of the digital assistants in the organization. The solution of the present disclosure solves the above problems well by using the first digital assistant as a unified entrance.

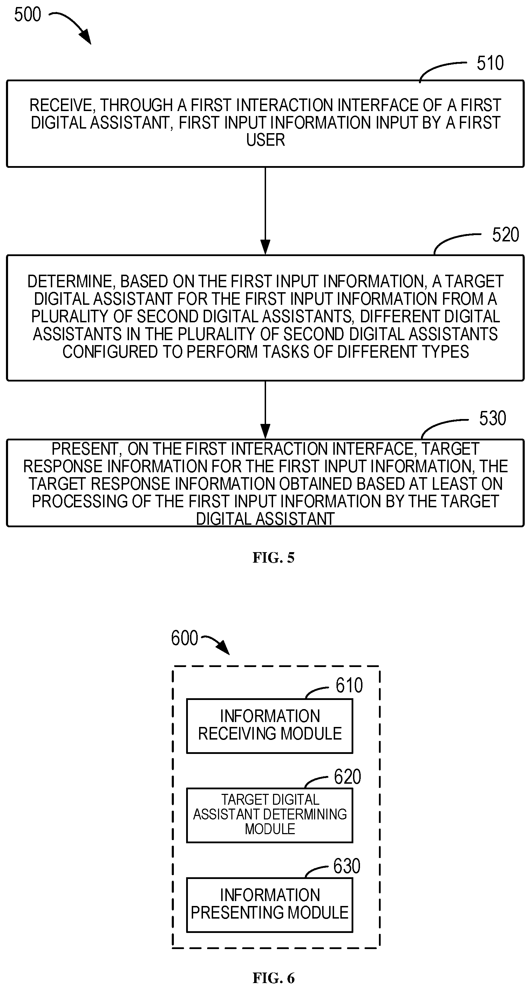

FIG. 5 shows a flowchart of a process 500 for interacting with a digital assistant according to some embodiments of the present disclosure. For ease of discussion, the process 500 will be described with reference to the environment 100 of FIG. 1. The process 500 may be implemented at the system management platform 110.

At block 510, the system management platform 110 receives, through a first interaction interface of a first digital assistant, first input information input by a first user.

At block 520, the system management platform 110 determines, based on the first input information, a target digital assistant for the first input information from a plurality of second digital assistants, different digital assistants in the plurality of second digital assistants configured to perform tasks of different types.

In some embodiments, determining, by the system management platform 110, the target digital assistant for the first input information from the plurality of second digital assistants 114 includes: determining, by using a machine learning model associated with the first digital assistant 112, a type of a target task indicated by the first input information; and determining, based on the type of the target task, the target digital assistant from at least one second digital assistant in the plurality of second digital assistants 114, where the at least one second digital assistant is at least one second digital assistant that is accessible and usable by the user 140 among the plurality of second digital assistants 114.

At block 530, the system management platform 110 presents, in the first interaction interface, target response information for the first input information, the target response information obtained based at least on processing of the first input information by the target digital assistant.

In some embodiments, the target response information is determined by: obtaining a processing result for the first input information provided by the target digital assistant; and generating, by using the first digital assistant, the target response information based on the processing result.

In some embodiments, determining the target digital assistant for the first input information from the plurality of second digital assistants includes: obtaining a processing result for the first input information and provided by a candidate digital assistant in the plurality of second digital assistants; and determining, by using a machine learning model associated with the first digital assistant and in response to the processing result not matching the first input information or the processing result indicating a processing failure, a digital assistant different from the candidate digital assistant in the plurality of second digital assistants as the target digital assistant.

In some embodiments, presenting, in the first interaction interface, the target response information for the first input information includes: recognizing target information in the processing result for the first input information and provided by the target digital assistant; and presenting, in response to no target information being recognized, the processing result in the first interaction interface as the target response information.

In some embodiments, the process 500 further includes updating, in response to the target information being recognized, the processing result based on a configured blocking policy; and presenting the updated processing result in the first interaction interface as the target response information.

In some embodiments, updating the processing result includes one of: replacing the processing result with preset information, the preset information indicating that the processing result contains the target information and cannot be presented, removing the target information from the processing result, or applying a mask to the target information.

In some embodiments, determining the target digital assistant for the first input information from the plurality of second digital assistants includes: determining, based on login information of the first user, permission information of the first user; determining, based on the permission information and from the plurality of second digital assistants, at least one second digital assistant accessible by the first user; and determining, based on the first input information, the target digital assistant from the at least one second digital assistant.

In some embodiments, the process 500 further includes: providing the permission information to the target digital assistant, to enable the target digital assistant to determine, based on the permission information, a knowledge base or a function module accessible by the first user.

In some embodiments, the process 500 further includes: receiving, through a second interaction interface of the target digital assistant, second input information input by the first user; and presenting, in the second interaction interface, response information obtained by processing the second input information by the target digital assistant.

In summary, according to the embodiments of the present disclosure, the target digital assistant for processing the input information may be automatically determined based on the input information of the user. In this manner, the digital assistant interaction entrances created by the organization through different platforms may be unified into one entrance, and intelligent scheduling of the digital assistants may be completed through the unified entrance. This allows the user to only use the unified entrance as the only digital assistant interaction entrance without affecting the reply effect of the agent. Moreover, no matter what problem, the user can consult the digital assistant through the unified entrance to obtain replies from different digital assistants and more accurate solutions. Therefore, the embodiments of the present disclosure significantly reduce the costs of the user understanding the functions of the digital assistants and manually selecting a digital assistant to be used, and greatly improve the user experience and convenience of using a multi-digital assistant system. In addition, the embodiments of the present disclosure also support customizing target information classification and grading, and ensure the security and compliance of the output information of the digital assistants by recognizing the defined target information and blocking sending of the target information.

The embodiments of the present disclosure further provide a corresponding apparatus for implementing the above method or process. FIG. 6 shows an example structural block diagram of an apparatus 600 for interacting with a digital assistant according to some embodiments of the present disclosure. The apparatus 600 may be implemented or included in a client device 110 and/or a server-side device 120. The respective modules/components in the apparatus 600 may be implemented by hardware, software, firmware, or any combination thereof.

As shown in FIG. 6, the apparatus 600 includes an information receiving module 610 configured to receive, through a first interaction interface of a first digital assistant, first input information input by a first user. The apparatus 600 further includes a target digital assistant determining module 620 configured to determine, based on the first input information, a target digital assistant for the first input information from a plurality of second digital assistants, different digital assistants in the plurality of second digital assistants being configured to perform tasks of different types. The apparatus 600 further includes an information presenting module 630 configured to present, in the first interaction interface, target response information for the first input information, the target response information being obtained based on at least partly of processing of the first input information by the target digital assistant.

In some embodiments, the target digital assistant determining module 620 is further configured to determine, by using a machine learning model associated with the first digital assistant, a type of a target task indicated by the first input information; and determine, based on the type of the target task, the target digital assistant from at least one second digital assistant in the plurality of second digital assistants, where the at least one second digital assistant is at least one second digital assistant that is accessible and usable by the user among the plurality of second digital assistants.

In some embodiments, the target response information is determined by: obtaining a processing result for the first input information provided by the target digital assistant; and generating, by using the first digital assistant, the target response information based on the processing result.

In some embodiments, the target digital assistant determining module 620 is further configured to obtain a processing result for the first input information and provided by a candidate digital assistant in the plurality of second digital assistants; and determine, by using a machine learning model associated with the first digital assistant and in response to the processing result not matching the first input information or the processing result indicating a processing failure, a digital assistant different from the candidate digital assistant in the plurality of second digital assistants as the target digital assistant.

In some embodiments, the information presenting module 630 is further configured to recognize target information in the processing result for the first input information and provided by the target digital assistant; and present, in response to no target information being recognized, the processing result in the first interaction interface as the target response information.

In some embodiments, the information presenting module 630 is further configured to update, in response to the target information being recognized, the processing result based on a configured blocking policy; and present the updated processing result in the first interaction interface as the target response information.

In some embodiments, the information presenting module 630 is further configured to replace the processing result with preset information, the preset information indicating that the processing result contains the target information and cannot be presented, and remove the target information from the processing result, or apply a mask to the target information.

In some embodiments, the target digital assistant determining module 620 is further configured to determine, based on login information of the first user, permission information of the first user; determine, based on the permission information and from the plurality of second digital assistants, at least one second digital assistant accessible by the first user; and based on the first input information, the target digital assistant from the at least one second digital assistant.

In some embodiments, the apparatus 600 further includes an information transmittal module configured to provide the permission information to the target digital assistant, to enable the target digital assistant to determine, based on the permission information, a knowledge base or a function module accessible by the first user.

In some embodiments, the information receiving module 610 is further configured to receive, through a second interaction interface of the target digital assistant, second input information input by the first user. The information presenting module 630 is further configured to present, in the second interaction interface, the response information obtained by processing the second input information by the target digital assistant.

The units and/or modules included in the apparatus 600 may be implemented in various manners, including software, hardware, firmware, or any combination thereof. In some embodiments, one or more units and/or modules may be implemented using software and/or firmware, such as machine-executable instructions stored on a storage medium. In addition to or as an alternative to the machine-executable instructions, some or all of the units and/or modules in the apparatus 600 may be implemented at least in part by one or more hardware logic components. By way of example and not limitation, example types of hardware logic components that may be used include a field programmable gate array (FPGA), an application specific integrated circuit (ASIC), an application specific standard product (ASSP), a system on a chip (SOC), a complex programmable logical device (CPLD), and the like.

It should be understood that, one or more steps in the above methods may be performed by an appropriate electronic device or a combination of electronic devices. Such an electronic device or a combination of electronic devices may include, for example, a device running the system management platform 110 in FIG. 1.

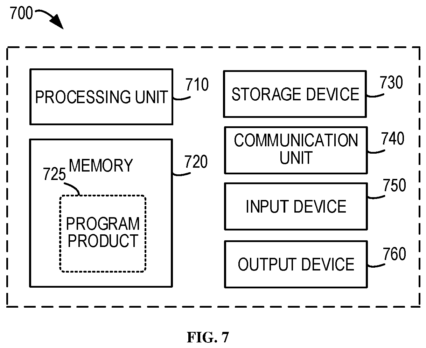

FIG. 7 shows a block diagram of an electronic device 700 in which one or more embodiments of the present disclosure may be implemented. It should be understood that, the electronic device 700 shown in FIG. 7 is only illustrative, and should not constitute any limitation to the functions and scope of the embodiments described herein. The electronic device 700 shown in FIG. 7 may include or be implemented as the system management platform 110 in FIG. 1 or the apparatus 600 in FIG. 6.

As shown in FIG. 7, the electronic device 700 is in the form of a general-purpose electronic device. The components of the electronic device 700 may include, but are not limited to, one or more processors or processing units 710, a memory 720, a storage device 730, one or more communication units 740, one or more input devices 750, and one or more output devices 760. The processing unit 710 may be an actual or virtual processor and may perform various processing according to the program stored in the memory 720. In a multi-processor system, the plurality of processing units execute computer-executable instructions in parallel to improve the parallel processing capability of the electronic device 700.

The electronic device 700 typically includes a plurality of computer storage media. Such media may be any available media accessible by the electronic device 700, including but not limited to, volatile and non-volatile media, removable and non-removable media. The memory 720 may be volatile memory (e.g., registers, cache, random access memory (RAM)), non-volatile memory (e.g., read-only memory (ROM), electrically erasable programmable read-only memory (EEPROM), flash memory), or some combination thereof. The storage device 730 may be a removable or non-removable medium, and may include a machine-readable medium, such as a flash drive, a magnetic disk, or any other medium, which may be capable of storing information and/or data and may be accessed within the electronic device 700.

The electronic device 700 may further include additional removable/non-removable, volatile/non-volatile storage media. Although not shown in FIG. 7, a disk drive for reading from or writing to a removable, non-volatile magnetic disk (e.g., a "floppy disk") and an optical disk drive for reading from or writing to a removable, non-volatile optical disk may be provided. In these cases, each drive may be connected to a bus (not shown) by one or more data media interfaces. The memory 720 may include a computer program product 725 having one or more program modules configured to perform various methods or actions of various embodiments of the present disclosure.

The communication unit 740 enables communication with other electronic devices through a communication medium. Additionally, the functions of the components of the electronic device 700 may be implemented in a single computing cluster or multiple computing machines that are capable of communicating through a communication connection. Therefore, the electronic device 700 may operate in a networked environment using logical connections to one or more other servers, network personal computers (PC), or another network node.

The input device 750 may be one or more input devices, such as a mouse, a keyboard, a trackball, etc. The output device 760 may be one or more output devices, such as a display, a speaker, a printer, etc. The electronic device 700 may also communicate with one or more external devices (not shown), such as a storage device, a display device, etc., communicate with one or more devices that enable a user to interact with the electronic device 700, or communicate with any device (e.g., a network card, a modem, etc.) that enables the electronic device 700 to communicate with one or more other electronic devices, as needed, through the communication unit 740. Such communication may be performed via an input/output (I/O) interface (not shown).

According to an example implementation of the present disclosure, a computer-readable storage medium is provided, on which computer-executable instructions are stored, where the computer-executable instructions are executed by a processor to implement the method described above. According to an example implementation of the present disclosure, a computer program product is further provided, the computer program product being tangibly stored on a non-transitory computer-readable medium and including computer-executable instructions, and the computer-executable instructions being executed by a processor to implement the method described above.

According to an example implementation of the present disclosure, a computer program product or a computer program is provided, and the computer program product or the computer program includes computer instructions stored in a computer-readable storage medium. A processor of a computer device reads the computer instructions from the computer-readable storage medium, and executes the computer instructions to cause the computer device to implement the method provided in various optional manners in FIG. 5, which will not be repeated here.

Various aspects of the present disclosure are described herein with reference to flowcharts and/or block diagrams of the method, apparatus, device and computer program product implemented according to the present disclosure. It should be understood that, each block of the flowcharts and/or the block diagrams and a combination of blocks in the flowcharts and/or the block diagrams may be implemented by computer-readable program instructions.

These computer-readable program instructions may be provided to a processing unit of a general-purpose computer, a special-purpose computer, or other programmable data processing apparatus, to produce a machine, such that the instructions, when executed by the processing unit of the computer or other programmable data processing apparatus, produce an apparatus for implementing functions/actions specified in one or more blocks in the flowcharts and/or the block diagrams. These computer-readable program instructions may also be stored in a computer-readable storage medium, and these instructions cause a computer, a programmable data processing apparatus and/or other devices to work in a specific manner, and thus, the computer-readable medium having instructions stored thereon includes an article of manufacture, including instructions for implementing various aspects of the functions/actions specified in one or more blocks in the flowcharts and/or the block diagrams.

The computer-readable program instructions may be loaded onto a computer, other programmable data processing apparatus, or other device, such that a series of operational steps are performed on the computer, other programmable data processing apparatus, or other device to produce a computer-implemented process, such that instructions executed on the computer, other programmable data processing apparatus, or other device implement the functions/actions specified in one or more blocks in the flowcharts and/or the block diagrams.

The flowcharts and block diagrams in the drawings show possible architectures, functions, and operations of the systems, methods and computer program products according to multiple implementations of the present disclosure. In this regard, each block in the flowcharts or block diagrams may represent a part of a module, a program segment, or an instruction, and the part of the module, the program segment, or the instruction contains one or more executable instructions for implementing a specified logical function. In some alternative implementations, the functions marked in the blocks may also occur in an order different from those marked in the drawings. For example, two consecutive blocks may, in fact, be executed substantially in parallel, or they may sometimes be executed in a reverse order, depending on the functions involved. It should also be noted that, each block in the block diagrams and/or the flowcharts, and a combination of blocks in the block diagrams and/or the flowcharts, may be implemented by a dedicated hardware-based system that performs the specified functions or actions, or may be implemented by a combination of dedicated hardware and computer instructions.

The implementations of the present disclosure have been described above, and the above description is illustrative, not exhaustive, and is not limited to the disclosed implementations. Many modifications and variations will be apparent to those skilled in the art without departing from the scope and spirit of the described implementations. The selection of terms used herein is intended to best explain the principles, practical applications, or improvements to the technology in the market of the implementations, or to enable other ordinary skilled in the art to understand the implementations disclosed herein.

## Claims

1. A method (500) for interacting with a digital assistant, comprising:
receiving (510), through a first interaction interface of a first digital assistant, first input information input by a first user;
determining (520), based on the first input information, a target digital assistant for the first input information from a plurality of second digital assistants, different digital assistants in the plurality of second digital assistants configured to perform tasks of different types; and
presenting (530), in the first interaction interface, target response information for the first input information, the target response information obtained based at least on processing of the first input information by the target digital assistant.

2. The method (500) of claim 1, wherein determining (520) the target digital assistant for the first input information from the plurality of second digital assistants comprises:
determining, by using a machine learning model associated with the first digital assistant, a type of a target task indicated by the first input information; and
determining, based on the type of the target task, the target digital assistant from at least one second digital assistant in the plurality of second digital assistants.

3. The method (500) of claim 1, wherein the target response information is determined by:
obtaining a processing result for the first input information provided by the target digital assistant; and
generating, by using the first digital assistant, the target response information based on the processing result.

4. The method (500) of claim 1, wherein determining (520) the target digital assistant for the first input information from the plurality of second digital assistants comprises:
obtaining a processing result for the first input information and provided by a candidate digital assistant in the plurality of second digital assistants; and
determining, by using a machine learning model associated with the first digital assistant and in response to the processing result not matching the first input information or the processing result indicating a processing failure, a digital assistant different from the candidate digital assistant in the plurality of second digital assistants as the target digital assistant.

5. The method (500) of claim 1, wherein presenting (530), in the first interaction interface, the target response information for the first input information comprises:
recognizing target information in the processing result for the first input information and provided by the target digital assistant; and
presenting, in response to no target information being recognized, the processing result in the first interaction interface as the target response information.

6. The method (500) of claim 5, further comprising:
updating, in response to the target information being recognized, the processing result based on a configured blocking policy; and
presenting the updated processing result in the first interaction interface as the target response information.

7. The method (500) of claim 6, wherein updating the processing result comprises one of:
replacing the processing result with preset information, the preset information indicating that the processing result contains the target information and cannot be presented,
removing the target information from the processing result, or
applying a mask to the target information.

8. The method (500) of claim 1, wherein determining (520) the target digital assistant for the first input information from the plurality of second digital assistants comprises:
determining, based on login information of the first user, permission information of the first user;
determining, based on the permission information and from the plurality of second digital assistants, at least one second digital assistant accessible by the first user; and
determining, based on the first input information, the target digital assistant from the at least one second digital assistant.

9. The method (500) of claim 8, further comprising:
providing the permission information to the target digital assistant, to enable the target digital assistant to determine, based on the permission information, a knowledge base or a function module accessible by the first user.

10. The method (500) of any of claims 1 to 9, further comprising:
receiving, through a second interaction interface of the target digital assistant, second input information input by the first user; and
presenting, in the second interaction interface, response information obtained by processing the second input information by the target digital assistant.

11. An apparatus (600) for interacting with a digital assistant, comprising:
an information receiving module (610) configured to receive, through a first interaction interface of a first digital assistant, first input information input by a first user;
a target digital assistant determining module (620) configured to determine, based on the first input information, a target digital assistant for the first input information from a plurality of second digital assistants, different digital assistants in the plurality of second digital assistants being configured to perform tasks of different types; and
an information presenting module (630) configured to present, in the first interaction interface, target response information for the first input information, the target response information being obtained based on at least partly of processing of the first input information by the target digital assistant.

12. An electronic device (700), comprising:
at least one processing unit (710); and
at least one memory (720) coupled to the at least one processing unit (710) and storing instructions for execution by the at least one processing unit (710), the instructions, when executed by the at least one processing unit (710), causing the electronic device (700) to perform the method of any of claims 1 to 10.

13. A computer-readable storage medium having a computer program stored thereon, the computer program, when executed by a processor, implementing the method of any of claims 1 to 10.

14. A computer program product comprising a computer program, wherein the computer program, when executed by a processor, implements the method according to any one of claims 1 to 10.
